(19) Europäisches Patentamt
European Patent Office
Office européen des brevets

(11) **EP 4 510 108 A1**

(12) **EUROPEAN PATENT APPLICATION**
published in accordance with Art. 153(4) EPC

(43) Date of publication:
**19.02.2025 Bulletin 2025/08**

(21) Application number: **23799187.2**

(22) Date of filing: **21.04.2023**

(51) International Patent Classification (IPC):
*G08G 1/0967* (2006.01)

(52) Cooperative Patent Classification (CPC):
**G08G 1/01; G08G 1/08; G08G 1/0967;
G08G 1/0968**

(86) International application number:
**PCT/CN2023/089918**

(87) International publication number:
**WO 2023/213200 (09.11.2023 Gazette 2023/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.05.2022 CN 202210482974**

(71) Applicant: **Huawei Technologies Co., Ltd.
Shenzhen, Guangdong 518129 (CN)**

(72) Inventors:
• **QIAN, Li
Shenzhen, Guangdong 518129 (CN)**
• **CHENG, Siyuan
Shenzhen, Guangdong 518129 (CN)**

(74) Representative: **Gill Jennings & Every LLP
The Broadgate Tower
20 Primrose Street
London EC2A 2ES (GB)**

(54) **METHOD FOR VEHICLE-TO-VEHICLE ENCOUNTERS AND RELATED APPARATUS**

(57) A vehicle meeting method and a related apparatus are provided and relate to the field of intelligent driving. The method includes: A vehicle switches from a first mode to a second mode (step 310), where the first mode is a mode in which a vehicle is controlled by the vehicle through autonomous decision-making, and the second mode is a mode in which the vehicle is remotely controlled by a roadside device through decision; the vehicle receives a vehicle meeting solution (step 320) from the roadside device, where the vehicle meeting solution is used to schedule a plurality of vehicles that meet during vehicle meeting; and the vehicle performs vehicle meeting (step 330) based on the vehicle meeting solution. The vehicle can autonomously determine whether to switch from the first mode to the second mode, or can passively switch from a first switching mode to the second mode after receiving a message from the roadside device or another vehicle, and perform vehicle meeting based on the vehicle meeting solution after receiving the vehicle meeting solution. A vehicle in the second mode does not need to play a game with the another vehicle during vehicle meeting, and only needs to perform vehicle meeting based on the received vehicle meeting solution. This can improve vehicle meeting efficiency.

_300_

| A first vehicle switches from a first mode to a second mode | 310 |

| The first vehicle receives a vehicle meeting solution from a roadside device | 320 |

| The first vehicle performs vehicle meeting based on the vehicle meeting solution | 330 |

FIG. 3

**EP 4 510 108 A1**

## Description

This application claims priority to Chinese Patent Application No. 202210482974.2, filed with the China National Intellectual Property Administration on May 5, 2022 and entitled "VEHICLE MEETING METHOD AND RELATED APPARATUS", which is incorporated herein by reference in its entirety.

## TECHNICAL FIELD

This application relates to the field of intelligent driving, and in particular, to a vehicle meeting method and a related apparatus.

## BACKGROUND

With continuous development of an intelligent driving technology, commercialization of autonomous driving vehicles becomes an inevitable trend. Vehicle meeting is common during traveling of vehicles. A current smart driving system mainly obtains a current road traffic participant and road condition information in real time via a roadside device, and sends related sensing information (for example, a possible forward collision warning) to a related vehicle. Then the vehicle makes a corresponding vehicle meeting decision based on the received sensing information and an ego vehicle decision-making algorithm. However, vehicle meeting efficiency is low in a complex road condition scenario, for example, a complex narrow lane, an unprotected left-turn intersection, or a lane change in dense traffic flow.

Therefore, a vehicle meeting method urgently needs to be provided to improve vehicle meeting efficiency.

## SUMMARY

This application provides a vehicle meeting method and a related apparatus, to improve vehicle meeting efficiency.

According to a first aspect, this application provides a vehicle meeting method. The method may be performed by a first vehicle, or may be performed by a component configured inside a first vehicle, like a chip or a chip system, or may be implemented by a logic module, software, or the like that has some or all functions of a first vehicle. This is not limited in this application.

For example, the method includes: switching from a first mode to a second mode, where the first mode is a mode in which a vehicle is controlled through autonomous decision-making of the vehicle, and the second mode is a mode in which the vehicle is remotely controlled by a roadside device through decision-making; receiving a vehicle meeting solution from the roadside device, where the vehicle meeting solution is used to schedule a plurality of vehicles that meet during vehicle meeting; and performing vehicle meeting based on the vehicle meeting solution.

Based on the foregoing solution, in a complex road condition scenario, the first vehicle can switch from the first mode to the second mode, and a vehicle in the second mode can perform vehicle meeting based on the vehicle meeting solution after receiving the vehicle meeting solution. The vehicle in the second mode is remotely controlled through decision-making of the roadside device, and does not need to be controlled through autonomous decision-making of the vehicle. Therefore, during vehicle meeting, no game needs to be performed between vehicles, and only vehicle meeting needs to be performed based on the received vehicle meeting solution. This can save time for performing game calculation between the vehicles, to improve vehicle meeting efficiency.

With reference to the first aspect, in some possible implementations of the first aspect, the vehicle meeting solution indicates a passing sequence of the plurality of vehicles during vehicle meeting.

During vehicle meeting, the passing sequence does not need to be calculated through a game between the vehicles, and vehicle meeting only needs to be performed based on the passing sequence indicated in the received vehicle meeting solution. This can save time for performing game calculation between the vehicles, to improve vehicle meeting efficiency.

Optionally, the vehicle meeting solution further indicates one or more of the following: a traveling direction, a traveling speed, and an acceleration that are recommended to the first vehicle.

Optionally, the vehicle meeting solution further indicates one or more of the following: a traveling direction, a traveling speed, and an acceleration that are recommended to each of the plurality of vehicles other than the first vehicle.

During vehicle meeting, the vehicles do not need to calculate a traveling direction, a traveling speed, an acceleration, or the like, and only need to perform vehicle meeting based on the traveling direction, the traveling speed, the acceleration, or the like indicated in the received vehicle meeting solution. This can save the time for game calculation between the vehicles to improve vehicle meeting efficiency.

With reference to the first aspect, in some possible implementations of the first aspect, the method further includes: determining, based on road condition information, that complexity of a current road condition is greater than a first preset threshold, where the road condition information is obtained based on data collected by a sensing device, the sensing device includes a sensing device deployed on a roadside and/or a sensing device deployed on the first vehicle; and sending a request message to the roadside device, where the request message is used to request to obtain the vehicle meeting solution.

The first vehicle can determine, based on the road condition information, whether the first vehicle is currently in a complex road condition scenario that the vehicle cannot control. When determining that the first vehicle is in the complex road condition scenario, the first vehicle can send the request message to the roadside device, to obtain vehicle meeting indication information from the roadside device. The first vehicle may actively switch from the first mode to the second mode before sending the request message to the roadside device, or may actively switch from the first mode to the second mode after sending the request message to the roadside device. This can avoid a game with another vehicle to improve vehicle meeting efficiency.

Optionally, the request message carries traveling information of the first vehicle, and the traveling information includes a planned route, and a current traveling direction and traveling speed.

In this case, the roadside device can determine, based on the traveling information of the first vehicle, the passing sequence of the plurality of vehicles indicated in the vehicle meeting solution, and a traveling direction, a traveling speed, an acceleration, or the like that are recommended to the first vehicle.

With reference to the first aspect, in some possible implementations of the first aspect, the method further includes: determining a second vehicle, where the second vehicle is one or more of the plurality of vehicles other than the first vehicle; and sending a notification message to the second vehicle, where the notification message indicates the second vehicle to switch from the first mode to the second mode.

Before sending the request message to the roadside device, or when sending the request message to the roadside device, or after sending the request message to the roadside device, the first vehicle notifies the second vehicle to switch from the first mode to the second mode, so that the second vehicle also accepts remote control of the roadside device. In this way, after receiving the vehicle meeting solution from the roadside device, the first vehicle and a second vehicle may meet based on the vehicle meeting solution. This avoids a game between the first vehicle and the second vehicle, to improve vehicle meeting efficiency.

Optionally, the request message carries indication information, and the indication information indicates the plurality of vehicles that may meet.

Before sending the notification message to the second vehicle, the first vehicle needs to first determine the second vehicle. After determining the second vehicle, the first vehicle may include the indication information in the request message and send the request message to the roadside device. The indication information may indicate that the plurality of vehicles that may meet include the first vehicle and the second vehicle.

With reference to the first aspect, in some possible implementations of the first aspect, the sending a request message to a roadside device may include: determining a first roadside device closest to the first vehicle; and sending the request message to the first roadside device.

The request message is sent to the roadside device closest to the first vehicle, so that time consumed for communication between the first vehicle and the roadside device can be shortened as much as possible, to improve vehicle meeting efficiency.

With reference to the first aspect, in some possible implementations of the first aspect, the method further includes: receiving a takeover message from the roadside device, where the takeover message indicates the first vehicle to switch from the first mode to the second mode.

That the first vehicle may switch from the first mode to the second mode after receiving the takeover message from the roadside device may be understood as that the first vehicle may passively switch from the first mode to the second mode, to wait for the roadside device to send the vehicle meeting solution to the first vehicle. This can avoid a game between the first vehicle and another vehicle to improve vehicle meeting efficiency.

With reference to the first aspect, in some possible implementations of the first aspect, the method further includes: receiving a notification message from a third vehicle, where the notification message indicates the first vehicle to switch from the first mode to the second mode, and the third vehicle is any vehicle in the plurality of vehicles other than the first vehicle; and sending traveling information of the first vehicle to the roadside device, where the traveling information includes a planned route, and a current traveling direction and traveling speed.

That the first vehicle may switch from the first mode to the second mode after receiving the notification message from the third vehicle may be understood as that the first vehicle may passively switch from the first mode to the second mode, send the traveling information of the first vehicle to the roadside device, and wait for the roadside device to send the vehicle meeting solution to the first vehicle, so that vehicle meeting only needs to be performed based on the received vehicle meeting solution. This can avoid a game between the first vehicle and another vehicle to improve vehicle meeting efficiency.

With reference to the first aspect, in some possible implementations of the first aspect, after the performing vehicle meeting based on the vehicle meeting solution, the method further includes: switching from the second mode to the first mode.

After vehicle meeting is completed based on the vehicle meeting solution, the first vehicle may actively switch from the first mode to the second mode, to autonomously determine and control traveling of the vehicle, so as to avoid affecting remote control of the roadside device on another vehicle by the roadside device due to excessive occupation of roadside device resources.

According to a second aspect, this application provides a vehicle meeting method. The method may be performed by a roadside device, or may be performed by a component configured inside a roadside device, like a chip or a chip system, or may be implemented by a logic module, software, or the like that has some or all functions of a roadside device. This is not limited in this application.

For example, the method includes: receiving traveling information of each of the plurality of vehicles, where the traveling information includes: a planned route, and a current traveling direction and traveling speed, and the plurality of vehicles are vehicles that meet; determining a vehicle meeting solution based on road condition information and the traveling information of each of the plurality of vehicles, where the road condition information indicates a current traffic condition on a road surface, and the vehicle meeting solution is used to schedule the plurality of vehicles during vehicle meeting; and sending the vehicle meeting solution to the plurality of vehicles.

Based on the solution, in the complex road condition scenario, the plurality of vehicles that meet are remotely controlled through decision-making of the roadside device, to provide the vehicle meeting solution for the plurality of vehicles that meet, so that the plurality of vehicles that meet only need to perform vehicle meeting based on the received vehicle meeting solution. This can save time for game calculation between vehicles to improve vehicle meeting efficiency.

With reference to the second aspect, in some possible implementations of the second aspect, before the determining a vehicle meeting solution, the method further includes: entering a command mode when it is determined, based on the road condition information, that complexity of a current road condition is greater than a second preset threshold, where the command mode is a mode in which the vehicle is remotely controlled; determining the plurality of vehicles that may meet; and sending a takeover message to the plurality of vehicles, where the takeover message indicates the vehicle to switch from a first mode to a second mode, the first mode is a mode in which a vehicle is controlled through autonomous decision-making of the vehicle, and the second mode is a mode in which the vehicle is remotely controlled through decision-making of the roadside device.

The roadside device may determine, based on the road condition information, whether a current road condition scenario is a complex road condition scenario, and automatically enter the command mode when determining that the current road condition scenario is the complex road condition scenario, to remotely control the plurality of vehicles to meet, without requiring the vehicles to make a vehicle meeting decision. This can avoid a game between the plurality of vehicles that meet, to improve vehicle meeting efficiency.

With reference to the second aspect, in some possible implementations of the second aspect, before the determining a vehicle meeting solution, the method further includes: entering a command mode when a request message is received from a first vehicle in the plurality of vehicles, where the command mode is a mode in which a vehicle is remotely controlled, and the request message is used to request to obtain the vehicle meeting solution.

The roadside device may passively enter the command mode after receiving the request message of the first vehicle, to remotely control the plurality of vehicles to meet, without requiring the vehicles to make a vehicle meeting decision. This can avoid a game between the plurality of vehicles that meet, to improve vehicle meeting efficiency.

Optionally, the request message carries at least one of the following: traveling information of the first vehicle; and indication information, where the indication information indicates vehicles that may meet.

With reference to the second aspect, in some possible implementations of the second aspect, the vehicle meeting solution is a vehicle meeting solution sent to the first vehicle, and the vehicle meeting solution indicates a passing sequence of the plurality of vehicles during vehicle meeting, and one or more of the following: a traveling direction, a traveling speed, and an acceleration that are recommended to the first vehicle.

Optionally, the vehicle meeting solution further indicates one or more of the following: a traveling direction, a traveling speed, and an acceleration that are recommended to each of the plurality of vehicles other than the first vehicle.

During vehicle meeting, the vehicles do not need to calculate a passing sequence, a traveling direction, a traveling speed, an acceleration, or the like of each vehicle. Instead, the vehicles only need to perform vehicle meeting based on the passing sequence, the traveling direction, the traveling speed, the acceleration, or the like that is indicated in the vehicle meeting solution received from the roadside device. This can save time for game calculation between vehicles, to improve vehicle meeting efficiency.

According to a third aspect, this application provides a vehicle meeting apparatus. The vehicle meeting apparatus may be configured to implement the vehicle meeting method according to the first aspect, the second aspect, any possible implementation of the first aspect, and any possible implementation of the second aspect. The vehicle meeting apparatus includes a corresponding module configured to perform the foregoing method. The module included in the vehicle meeting apparatus may be implemented by using software and/or hardware.

According to a fourth aspect, this application provides a vehicle meeting apparatus. The vehicle meeting apparatus includes a processor. The processor is coupled to a memory, and may be configured to execute a computer program in the memory, so as to implement the vehicle meeting method according to the first aspect, the second aspect, any possible implementation of the first aspect, and any possible implementation of the second aspect.

Optionally, the vehicle meeting apparatus further includes the memory.

Optionally, the vehicle meeting apparatus further includes a communication interface, and the processor is coupled to the communication interface.

According to a fifth aspect, this application provides a vehicle. The vehicle may be configured to implement the method according to the first aspect and any one of the possible implementations of the first aspect. The vehicle includes a corresponding module configured to perform the foregoing method. The module included in the vehicle may be implemented by using software and/or hardware.

According to a sixth aspect, this application provides a vehicle. The vehicle includes a processor. The processor is coupled to a memory, and may be configured to execute a computer program in the memory, to implement the vehicle meeting method according to any one of the first aspect or any possible implementation of the first aspect.

Optionally, the vehicle further includes the memory.

Optionally, the vehicle further includes a communication interface, and the processor is coupled to the communication interface.

According to a seventh aspect, this application provides a roadside device. The roadside device may be configured to implement the method according to the second aspect and any possible implementation of the second aspect. The roadside device includes a corresponding module configured to perform the foregoing method. The module included in the roadside device may be implemented by using software and/or hardware.

According to an eighth aspect, this application provides a roadside device. The roadside device includes a processor. The processor is coupled to a memory, and may be configured to execute a computer program in the memory, to implement the vehicle meeting method according to the second aspect and any possible implementation of the second aspect.

Optionally, the roadside device further includes the memory.

Optionally, the roadside device further includes a communication interface, and the processor is coupled to the communication interface.

According to a ninth aspect, this application provides a chip system. The chip system includes at least one processor, configured to support implementation of the function in the first aspect or any one of the possible implementations of the first aspect; or configured to support implementation of the function according to the second aspect and any possible implementation of the second aspect, for example, receiving or processing data in the foregoing method.

In a possible design, the chip system further includes a memory, the memory is configured to store program instructions and data, and the memory is located in the processor or outside the processor.

The chip system may include a chip, or may include a chip and another discrete device.

According to a tenth aspect, this application provides a computer-readable storage medium. The computer storage medium stores a computer program (which may also be referred to as code or instructions). When the computer program is run by a processor, the method according to the first aspect and any possible implementation of the first aspect is performed; or the method according to the second aspect and any possible implementation of the second aspect is performed.

According to an eleventh aspect, this application provides a computer program product. The computer program product includes a computer program (which may also be referred to as code or instructions). When the computer program is run, the method according to the first aspect and any possible implementation of the first aspect is performed; or the method according to the second aspect and any possible implementation of the second aspect is performed.

It should be understood that technical solutions of the third aspect to the eleventh aspect of this application correspond to technical solutions of the first aspect and the second aspect of this application, and beneficial effects achieved by those aspects and corresponding feasible implementations are similar. Details are not described again.

**BRIEF DESCRIPTION OF DRAWINGS**

FIG. 1 is a diagram of a scenario applicable to a vehicle meeting method according to an embodiment of this application;

FIG. 2 is a diagram of a system architecture applicable to a vehicle meeting method according to an embodiment of this application;

FIG. 3 is a schematic flowchart of a vehicle meeting method according to an embodiment of this application;

FIG. 4 is a schematic flowchart of another vehicle meeting method according to an embodiment of this application;

FIG. 5A and FIG. 5B are a diagram of a vehicle meeting method shown from a perspective of interaction between a vehicle and a roadside device according to an embodiment of this application;

FIG. 6A and FIG. 6B are another diagram of a vehicle meeting method shown from a perspective of interaction between a vehicle and a roadside device according to an embodiment of this application;

FIG. 7 is a block diagram of a vehicle meeting apparatus according to an embodiment of this application;

FIG. 8 is another block diagram of a vehicle meeting apparatus according to an embodiment of this application; and

FIG. 9 is still another block diagram of a vehicle meeting apparatus according to an embodiment of this application.

## DESCRIPTION OF EMBODIMENTS

The following describes technical solutions of this application with reference to accompanying drawings.

For ease of clearly describing technical solutions in embodiments of this application, the following descriptions are first provided.

First, in embodiments of this application, words such as "first", "second", and "third" are used to distinguish between same items or similar items having basically same functions and effects. For example, a first vehicle, a second vehicle, and a third vehicle are used to distinguish between different vehicles, and a sequence of the first vehicle, the second vehicle, and the third vehicle is not limited. A person skilled in the art may understand that the words such as "first", "second", and "third" do not limit a quantity and an execution sequence, and the words such as "first", "second", and "third" do not indicate a definite difference.

Second, in embodiments of this application, "at least one type (piece)" means one or more types (pieces). In addition, "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific meaning represented by the character "/" may be understood with reference to the context.

Third, in embodiments of this application, terms "include", "contain", and any other variants thereof in this application are intended to cover non-exclusive inclusion. For example, a process, method, system, product, or device that includes a series of steps or units are not limited to those steps or units that are clearly listed, but may include other steps or units that are not explicitly listed or are inherent to such a process, method, product, or device.

For ease of understanding the method provided in this application, the following describes in detail classification of levels of an autonomous driving technology.

Currently, in the field of intelligent driving, levels of automation provided by the society of automotive engineers (society of automotive engineers, SAE) SAE J3016 are widely used. According to the SAE's levels of automation, the autonomous driving technology is classified into six levels from L0 to L5 in ascending order. The level L0 represents no automation, and the level L5 represents full automation (that is, no driver intervention is required under all conditions). In the SAE, the level L0 to the level L2 are named "driver support features" (driver support features), and the level L3 to the level L5 are named "automated driving features" (automated driving features).

For the level L0, a driver is the only operator of a vehicle and needs to control all control apparatuses such as a steering wheel, a throttle, and a brake, but active safety functions such as autonomous emergency braking (autonomous emergency braking, AEB) can be provided.

For the level L1 and the level L2, the driver is still the only operator of the vehicle, and needs to control all control apparatuses such as the steering wheel, the throttle, and the brake, but more auxiliary/support functions such as adaptive cruise or lane holding can be provided.

For the level L3, an autonomous driving system of the vehicle may drive the vehicle in some cases. For example, when traffic congestion occurs, the vehicle may automatically drive by using a traffic jam chauffeur (traffic jam chauffeur) function. In this case, the driver does not need to drive the vehicle. The driver needs to take over the vehicle when necessary.

For the level L4, the driver does not need to take over the vehicle usually. An area driverless taxi (driverless taxi) is a typical level L4 autonomous driving scenario.

The level L5 represents full automation under any condition and is an ultimate ideal level of automation. Currently, only some vehicles can implement an L2 autonomous driving technology, and the technology is still being continuously improved.

It should be understood that the vehicle meeting method described below may be applied to an autonomous driving vehicle at the level L2 or below, and may also be applied to a future autonomous driving vehicle at the level L3 or above. This is not limited in embodiments of this application. It should be further understood that in a future autonomous driving vehicle at the level L3 or above, the vehicle can implement most driving functions. When it is found that the driver is about to be in a fatigue state, a reminder may be sent to the driver, so that the driver takes over the vehicle. That the driver takes over the vehicle means that the driver manually drives the vehicle without vehicle assistance. The mode in which the driver manually drives the vehicle may also be referred to as a manual mode.

With continuous development of the autonomous driving technology, commercialization of autonomous driving vehicles becomes an inevitable trend. Vehicle meeting is common during traveling of vehicles. A current smart driving system mainly obtains a current road traffic participant and road condition information in real time in combination of a roadside sensing device and a roadside computing device, and sends related sensing information (for example, a possible forward collision warning) to a related vehicle. Then the vehicle makes a corresponding vehicle meeting decision based on the received sensing information and an ego vehicle decision-making algorithm. However, in a complex vehicle meeting scenario, for example, a complex narrow lane, an unprotected left-turn intersection, or a lane change in dense traffic flow, there is a game of a plurality of vehicles, and the vehicles cannot accurately predict behavior that may be taken by another meeting vehicle. Consequently, there are a plurality of tentative and repeated iterations in an ego vehicle decision-making algorithm, which leads to low vehicle meeting efficiency.

Therefore, this application provides a vehicle meeting method and a related apparatus, so that in a complex road condition scenario, a vehicle can switch from an autonomously decided first mode to a second mode in which a roadside device remotely controls the vehicle, and perform vehicle meeting based on a vehicle meeting solution delivered by the roadside device, to avoid a game between a plurality of vehicles that meet, so as to improve meeting efficiency.

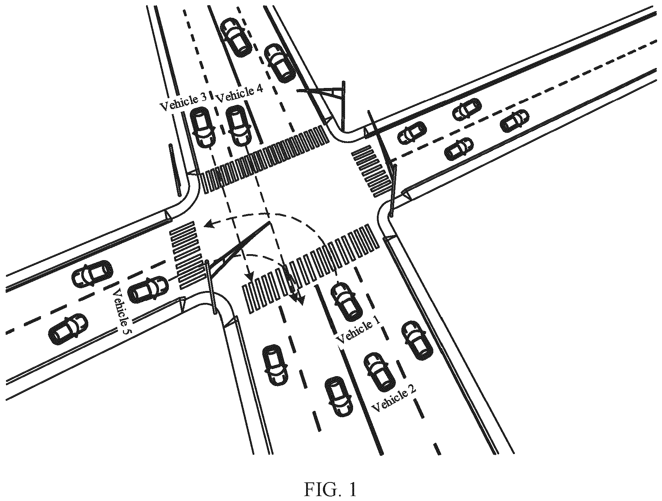

FIG. 1 is a diagram of a scenario applicable to a vehicle meeting method according to an embodiment of this application.

FIG. 1 shows an unprotected left-turn intersection scenario. An unprotected left-turn intersection means that no left-turn green light is specially disposed at the intersection, and a left-turn vehicle and a straight-through vehicle travel at the same time. For example, in the scenario shown in FIG. 1, a vehicle 1 and a vehicle 2 are about to turn left, a vehicle 3 and a vehicle 4 are about to go straight, and a vehicle 5 is about to turn right. When the vehicle 1, the vehicle 2, the vehicle 3, and the vehicle 4 travel at the same time, they may meet at an intersection (as shown by dashed arrows in the figure, a cross between dashed arrows may indicate that vehicles meet). The vehicle 5, the vehicle 3, and the vehicle 4 may also meet at an intersection when they travel at the same time. The scenario may be an example of a complex road condition scenario.

It should be noted that FIG. 1 is merely an example. In an actual application scenario, more or fewer vehicles that meet may be included. This is not limited in this application.

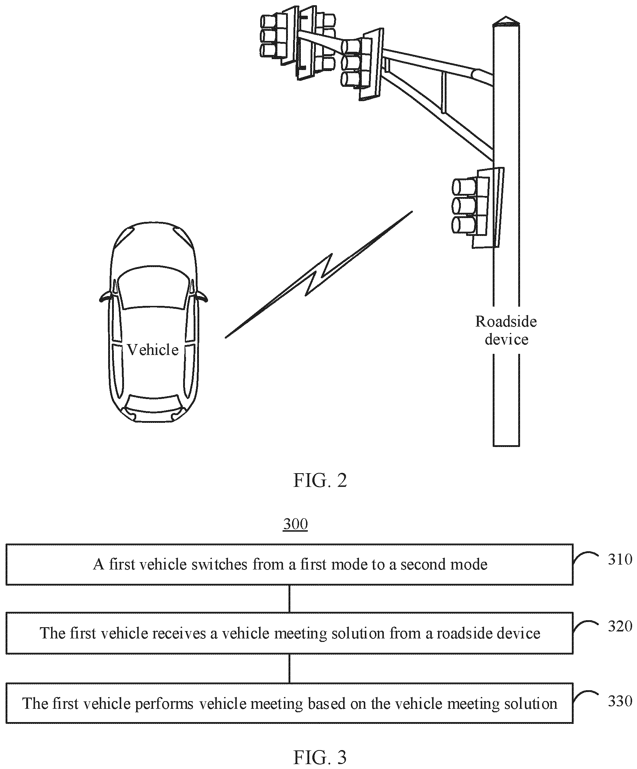

FIG. 2 is a diagram of a system architecture applicable to a vehicle meeting method according to an embodiment of this application. As shown in FIG. 2, a vehicle may communicate with a roadside device.

It should be noted that the roadside device may include a roadside sensing device and a roadside computing device. The roadside sensing device may be a high-resolution multi-sensor fusion system that includes a plurality of types of sensing devices in collaboration, to jointly implement comprehensive sensing of a surrounding traffic condition, and is placed on a roadside in a distributed manner. A plurality of types of common sensor devices may include: a camera, a lidar, a millimeter-wave radar, and the like. The camera has low costs, and can recognize a pedestrian and a traffic sign, but has high dependence on light. The millimeter-wave radar is not affected by weather, have a long detection distance and high precision, but is difficult to recognize a pedestrian. The lidar has high precision and three-dimensional modeling function. However, the lidar has high costs and is greatly affected by weather. By comprehensively using a plurality of intelligent sensing devices, the roadside sensing device can more comprehensively and accurately sense the traffic condition and a surrounding environment. The roadside sensing device is connected to the roadside computing device, and sends related information of a sensed traffic road condition to the roadside computing device.

The roadside computing device may include high-performance artificial intelligence computing processing devices such as a central processing unit (central processing unit, CPU), a graphics processing unit (graphics processing unit, GPU), and a field programmable gate array (field programmable gate array, FPGA), and is placed on the roadside in a distributed manner to implement an edge computing function. The roadside computing device is configured to perform scheduling and calculation to obtain a currently appropriate meeting solution based on related information that is about a traffic road condition near a meeting point and that is sent by the roadside sensing device, respective traveling information sent by vehicles that meet, and the like. The roadside computing device may be communicatively connected to the roadside sensing device, a smart transportation cloud, and a surrounding autonomous driving vehicle through wireless communication.

The following describes the vehicle meeting method in embodiments of this application with reference to accompanying drawings.

FIG. 3 is a schematic flowchart of a vehicle meeting method according to an embodiment of this application. The method may be performed by a first vehicle, or may be performed by a component configured inside a first vehicle, like a chip or a chip system, or may be implemented by a logic module, software, or the like that has some or all functions of a first vehicle. This is not limited in this application.

It should be noted that the first vehicle is one of a plurality of vehicles that meet. For example, the first vehicle may be any one of the vehicle 1 to the vehicle 5 shown in FIG. 1. This is not limited in embodiments of this application.

As shown in FIG. 3, a method 300 may include step 310 to step 330. The following describes each step in the method 300 in detail.

In step 310, the first vehicle switches from a first mode to a second mode.

The first mode may be a mode in which the vehicle is controlled through autonomous decision-making of the vehicle, and the second mode may be a mode in which the vehicle is remotely controlled by a roadside device through a decision-making.

The first vehicle may interrupt autonomous decision-making (namely, ego vehicle decision-making), and actively switch from the first mode to the second mode, or may passively switch from the first mode to the second mode. The following describes in detail that the first vehicle actively and passively switches from the first mode to the second mode.

Actively switching from the first mode to the second mode:

In a possible implementation, when determining, based on road condition information, that complexity of a current road condition is greater than a first preset threshold, the first vehicle actively switches from the first mode to the second mode.

In this implementation, the method 300 may further include the following steps.

Step 1: The first vehicle determines, based on the road condition information, that the complexity of the current road condition is greater than the first preset threshold.

Step 2: The first vehicle sends a request message to the roadside device, where the request message is used to request to obtain a vehicle meeting solution.

The road condition information is obtained based on data collected by a sensing device, and the sensing device includes a sensing device deployed on a roadside and/or a sensing device deployed on the first vehicle. The vehicle meeting solution is used to schedule a plurality of vehicles that meet during vehicle meeting.

The data collected by the sensing devices may be understood as most original data collected by the sensing device of the first vehicle and/or the sensing device on the roadside. The road condition information may be obtained by analyzing and processing the original data. The road condition information may include, for example, a width and a slope of a lane, whether there is water on a road surface, whether there is ice or snow on the road surface, vehicle traffic, indication information of traffic signal lights, a lane line, landmark indication information, and whether a traffic accident occurs on a road ahead. This is not limited in embodiments of this application.

For example, the first vehicle sequentially performs step 1, step 310, and step 2. More specifically, before performing step 310, the first vehicle may determine, based on the road condition information, whether the complexity of the current road condition is greater than the first preset threshold. When determining that the complexity of the current road condition is greater than the first preset threshold, the first vehicle may determine that a current road condition scenario is a complex road condition scenario that the first vehicle cannot control. In this case, the first vehicle performs step 310, that is, the first vehicle actively switches from the first mode to the second mode, and waits for the roadside device to remotely control the first vehicle. After step 310 is performed, the first vehicle may send the request message to the roadside device, to request the roadside device to send the vehicle meeting solution to the first vehicle, to remotely control the first vehicle.

For another example, the first vehicle sequentially performs step 1, step 2, and step 310. More specifically, before performing step 310, the first vehicle may determine, based on the road condition information, whether the complexity of the current road condition is greater than the first preset threshold. When determining that the complexity of the current road condition is greater than the first preset threshold, the first vehicle may determine that a current road condition scenario is a complex road condition scenario that the first vehicle cannot control, and then send the request message to the roadside device, to request the roadside device to send the vehicle meeting solution to the first vehicle and remotely control the first vehicle. After sending the request message to the roadside device, the first vehicle performs step 310, that is, the first vehicle actively switches from the first mode to the second mode, and waits for the roadside device to remotely control the first vehicle.

For still another example, the first vehicle may first perform step 1, and then simultaneously perform step 2 and step 310. More specifically, before performing step 310, the first vehicle may determine, based on the road condition information, whether the complexity of the current road condition is greater than the first preset threshold. When determining that the complexity of the current road condition is greater than the first preset threshold, the first vehicle may determine that a current road condition scenario is a complex road condition scenario that the first vehicle cannot control. In this case, the first vehicle may actively switch from the first mode to the second mode when sending the request message to the roadside device.

Optionally, that the first vehicle sends a request message to the roadside device may include: The first vehicle determines a first roadside device closest to the first vehicle, and sends a request message to the first roadside device.

For example, after determining that the complexity of the current road condition is greater than the first preset threshold, the first vehicle may first calculate a roadside device closest to the first vehicle, namely, the first roadside device, and then send the request message to the first roadside device. This can shorten time consumed for communication between the first vehicle and the roadside device as much as possible, to improve vehicle meeting efficiency.

Optionally, the request message carries traveling information of the first vehicle, and the traveling information includes a planned route, and a current traveling direction and traveling speed.

When sending the request message to the roadside device, the first vehicle may include the traveling information such as the planned route, and the current traveling direction and traveling speed of the first vehicle in the request message and send the request message to the roadside device, so that the roadside device can determine the vehicle meeting solution based on the traveling information of the first vehicle.

Optionally, after step 1, the method 300 may further include the following steps.

Step 3: The first vehicle determines a second vehicle, where the second vehicle is one or more of the plurality of vehicles other than the first vehicle.

Step 4: The first vehicle sends a notification message to the second vehicle, where the notification message indicates the second vehicle to switch from the first mode to the second mode.

For example, the first vehicle may determine one or more vehicles that meet the first vehicle. As shown in FIG. 1, if the vehicle 1 is the first vehicle, for the vehicle 1, when the vehicle 1 turns left, the vehicle 1 may meet the vehicle 3 and the vehicle 4 that are going straight. The vehicle 1 may determine the vehicle 3 and the vehicle 4 as second vehicles, and send notification messages to the vehicle 3 and the vehicle 4, so that the vehicle 3 and the vehicle 4 also switch from the first mode to the second mode and accept remote control of the roadside device.

It should be noted that step 310 and step 3 may be performed after step 1, and step 4 may be performed after step 3. However, a specific execution sequence of step 310, step 2, step 3, and step 4 is not limited.

Optionally, based on the foregoing step 3, the request message may carry indication information, and the indication information indicates the plurality of vehicles that may meet.

For example, as shown in FIG. 1, if the vehicle 1 is the first vehicle, for the vehicle 1, the plurality of vehicles that may meet include the vehicle 1, the vehicle 3, and the vehicle 4. After determining that the vehicle 3 and the vehicle 4 are the second vehicles, the vehicle 1 may include, in the request message, indication information indicating that the vehicle 1, the vehicle 3, and the vehicle 4 may meet, and send the request message to the roadside device.

It should be understood that, in this implementation, step 2 is performed after step 3. To be specific, step 310 and step 3 may be performed after step 1, step 4 may be performed after step 3, and step 2 may be performed after step 3. However, a specific execution sequence of step 310, step 2, step 3, and step 4 is not limited.

Passively switching from the first mode to the second mode:

In a possible implementation, the first vehicle may passively switch from the first mode to the second mode when receiving a takeover message from the roadside device.

In this implementation, the method 300 may further include: The first vehicle receives the takeover message from the roadside device.

The takeover message may indicate the first vehicle to switch from the first mode to the second mode.

For example, as shown in FIG. 1, if the vehicle 1 is the first vehicle, after receiving the takeover message from the roadside device, the vehicle 1 may passively switch from the first mode to the second mode, to wait for the roadside device to send a vehicle meeting solution to the vehicle 1. This can avoid a game between the vehicle 1 and the vehicle 3 and a game between the vehicle 1 and the vehicle 4, to improve vehicle meeting efficiency.

In another possible implementation, the first vehicle may passively switch from the first mode to the second mode when receiving a notification message from a third vehicle.

In this implementation, the method 300 may further include the following steps.

Step 5: The first vehicle receives the notification message from the third vehicle.

Step 6: The first vehicle sends traveling information of the first vehicle to the roadside device.

The notification message indicates the first vehicle to switch from the first mode to the second mode. As described above, the traveling information of the first vehicle may include a planned route, a current traveling direction and traveling speed, and the like of the first vehicle.

The third vehicle is any vehicle in the plurality of vehicles other than the first vehicle. As shown in FIG. 1, if the vehicle 1 is the first vehicle, the vehicle 3 or the vehicle 4 may be the third vehicle. In this case, the vehicle 1 may receive a notification message from the vehicle 3 or the vehicle 4. After receiving the notification message from the vehicle 3 or the vehicle 4, the vehicle 1 may passively switch from the first mode to the second mode, and may send the traveling information of the vehicle 1 to the roadside device, to provide a data basis for the roadside device to calculate and determine a vehicle meeting solution, and wait for the roadside device to send the vehicle meeting solution to the vehicle 1.

It should be noted that, in this implementation, step 5 may be performed before step 310, but a specific execution sequence of step 310 and step 6 is not limited. In other words, step 310 may be performed before step 6, or step 310 may be performed after step 6, or step 310 and step 6 may be simultaneously performed. This is not limited in embodiments of this application.

In step 320, the first vehicle receives the vehicle meeting solution from the roadside device.

As described above, the vehicle meeting solution is used to schedule a plurality of vehicles that meet during vehicle meeting. To be specific, the roadside device may remotely control the first vehicle by using the vehicle meeting solution, and correspondingly, the first vehicle may control traveling of a vehicle body based on the vehicle meeting solution, to complete meeting with another vehicle.

For example, as shown in FIG. 1, if the vehicle 1 is the first vehicle, the vehicle 1 may receive the vehicle meeting solution from the roadside device.

In a possible implementation, the vehicle meeting solution may indicate a passing sequence of the plurality of vehicles during vehicle meeting.

Example 1: The first vehicle actively switches from the first mode to the second mode. As shown in FIG. 1, if the vehicle 1 is the first vehicle, the vehicle 3 and the vehicle 4 are second vehicles. For the vehicle 1, the vehicle 1, the vehicle 3, and the vehicle 4 are the plurality of vehicles during vehicle meeting. In this case, the vehicle meeting solution may indicate a passing sequence of the vehicle 1, the vehicle 3, and the vehicle 4 at an intersection during vehicle meeting.

Example 2: After receiving the notification message of the third vehicle, the first vehicle passively switches from the first mode to the second mode. As shown in FIG. 1, if the vehicle 1 is the first vehicle, the vehicle 3 or the vehicle 4 is the third vehicle. An example in which the vehicle 3 is the third vehicle is used. The vehicle 1 receives the notification message from the vehicle 3. For the vehicle 1, the vehicle 1 and the vehicle 3 are the plurality of vehicles during vehicle meeting. In this case, the vehicle meeting solution may indicate a passing sequence of the vehicle 1 and the vehicle 3 at an intersection during vehicle meeting.

Example 3: After receiving the takeover message of the roadside device, the first vehicle passively switches from the first mode to the second mode. As shown in FIG. 1, each of the vehicle 1 to the vehicle 5 may be the first vehicle. For the roadside device, the vehicle 1 to the vehicle 5 are the plurality of vehicles during vehicle meeting. In this case, the vehicle meeting solution may indicate a passing sequence of the vehicle 1 to the vehicle 5 at an intersection during vehicle meeting.

Optionally, the vehicle meeting solution further indicates one or more of the following: a traveling direction, a traveling speed, and an acceleration that are recommended to the first vehicle.

In this implementation, content indicated by vehicle meeting solutions sent to different vehicles may be different in addition to the passing sequence of the plurality of vehicles. The following provides detailed descriptions with reference to Example 1 to Example 3.

With reference to Example 1 to Example 3, the vehicle 1 is the first vehicle. In addition to indicating the passing sequence of the plurality of vehicles during vehicle meeting, a vehicle meeting solution sent by the roadside device to the vehicle 1 may indicate one or more of the traveling direction, the traveling speed, the acceleration, and the like that are recommended to the vehicle 1.

With reference to Example 1, in addition to indicating the passing sequence of the vehicle 1, the vehicle 3, and the vehicle 4, a vehicle meeting solution sent by the roadside device to the vehicle 3 may indicate one or more of a traveling direction, a traveling speed, an acceleration, and the like that are recommended to the vehicle 3. Similarly, in addition to indicating the passing sequence of the vehicle 1, the vehicle 3, and the vehicle 4, a vehicle meeting solution sent by the roadside device to the vehicle 4 may indicate one or more of a traveling direction, a traveling speed, an acceleration, and the like that are recommended to the vehicle 4.

With reference to Example 2, in addition to indicating the passing sequence of the vehicle 1 and the vehicle 3, the vehicle meeting solution sent by the roadside device to the vehicle 3 may indicate one or more of the traveling direction, the traveling speed, the acceleration, and the like that are recommended to the vehicle 3.

With reference to Example 3, in addition to indicating the passing sequence of the vehicle 1 to the vehicle 5, a vehicle meeting solution sent by the roadside device to the vehicle 2 may indicate one or more of a traveling direction, a traveling speed, an acceleration, and the like that are recommended to the vehicle 2. Similarly, in addition to indicating the passing sequence of the vehicle 1 to the vehicle 5, vehicle meeting solutions sent by the roadside device to the vehicle 3 to the vehicle 5 may indicate one or more of traveling direction, traveling speed, acceleration, and the like that are recommended to each vehicle.

Optionally, the vehicle meeting solution further indicates one or more of the following: the traveling direction, the traveling speed, and the acceleration that are recommended to each of the plurality of vehicles. To be specific, in addition to indicating the passing sequence of the plurality of vehicles during vehicle meeting and one or more of the traveling direction, the traveling speed, the acceleration, and the like that are recommended to the first vehicle, the vehicle meeting solution sent to the first vehicle may indicate one or more of a traveling direction, a traveling speed, and an acceleration that are recommended to each of the plurality of vehicles other than the first vehicle.

In this implementation, content indicated by the vehicle meeting solutions sent to different vehicles may be the same. The following provides detailed descriptions with reference to Example 1 to Example 3.

With reference to Example 1, vehicle meeting solutions sent to the vehicle 1, the vehicle 3, and the vehicle 4 are the same and may not only indicate the passing sequence of the vehicle 1, the vehicle 3, and the vehicle 4, but also indicate a traveling direction, a traveling speed, and an acceleration that are recommended to each of the vehicle 1, the vehicle 3, and the vehicle 4.

With reference to Example 2, vehicle meeting solutions sent to the vehicle 1 and the vehicle 3 are the same, and may not only indicate the passing sequence of the vehicle 1 and the vehicle 3, but also indicate a traveling direction, a traveling speed, and an acceleration that are recommended to either of the vehicle 1 and the vehicle 3.

With reference to Example 3, vehicle meeting solutions sent to the vehicle 1 to the vehicle 5 are the same, and may not only indicate the passing sequence of the vehicle 1 to the vehicle 5, but also indicate a traveling direction, a traveling speed, and an acceleration that are recommended to each of the vehicle 1 to the vehicle 5.

In step 330, the first vehicle performs vehicle meeting based on the vehicle meeting solution.

For example, after receiving the vehicle meeting solution from the roadside device, the first vehicle may parse the vehicle meeting solution, to obtain, through parsing, the passing sequence of the plurality of vehicles including the first vehicle during vehicle meeting, or determine a passing order of the first vehicle, and obtain, through parsing, the traveling direction, the traveling speed, the acceleration, and the like that are recommended to the first vehicle. Therefore, the first vehicle may control, based on the passing sequence that corresponds to the first vehicle and that is obtained through parsing, and vehicle meeting indication information such as the traveling direction, the traveling speed, and the acceleration that are recommended to the first vehicle, a vehicle body of the first vehicle, to perform vehicle meeting based on the parsed vehicle meeting indication information and the like.

Optionally, after the vehicle meeting is performed based on the vehicle meeting solution, the method 300 may further include: The first vehicle switches from the second mode to the first mode.

The first vehicle may actively switch from the second mode to the first mode, and continue to perform autonomous decision-making (namely, ego vehicle decision-making).

For example, as shown in FIG. 1, if the vehicle 1 is the first vehicle, after the vehicle 1 performs vehicle meeting based on the vehicle meeting solution, that is, after the vehicle 1 meets the vehicle 3 and the vehicle 4 based on the vehicle meeting solution and passes through an intersection, the vehicle 1 may actively switch from the second mode to the first mode, and continue to perform autonomous decision-making in the first mode to control traveling of the vehicle body.

In addition, the roadside device may determine whether the first vehicle completes vehicle meeting based on the vehicle meeting solution. When the roadside device determines that the first vehicle completes the vehicle meeting based on the vehicle meeting solution, the roadside device may send a switching instruction to the first vehicle. The switching instruction indicates the first vehicle to switch from the second mode to the first mode. This implementation may be understood as that the first vehicle passively switches from the second mode to the first mode. This is not limited in this application.

Based on the foregoing solution, in a complex road condition scenario, the first vehicle can switch from the first mode to the second mode, and a vehicle in the second mode can perform vehicle meeting based on the vehicle meeting solution after receiving the vehicle meeting solution. The vehicle in the second mode is remotely controlled through decision-making of the roadside device, and does not need to be controlled through autonomous decision-making of the vehicle. Therefore, during vehicle meeting, no game needs to be performed between vehicles, and only the vehicle meeting needs to be performed based on the received vehicle meeting solution. This can save time for performing game calculation between vehicles, to improve vehicle meeting efficiency.

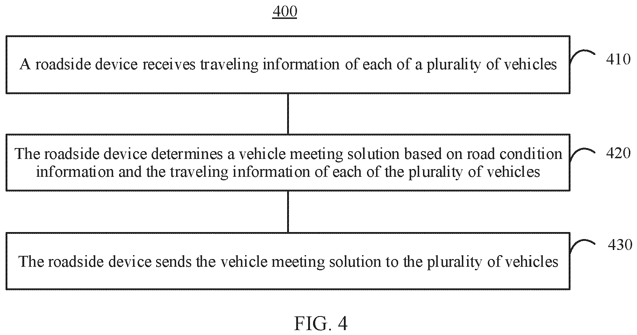

FIG. 4 is a schematic flowchart of another vehicle meeting method according to an embodiment of this application. The method may be performed by a roadside device, or may be performed by a component configured inside a roadside device, like a chip or a chip system, or may be implemented by a logic module, software, or the like that has some or all functions of a roadside device. This is not limited in this application.

As shown in FIG. 4, a method 400 may include step 410 to step 430. The following describes each step in the method 400 in detail.

In step 410, the roadside device receives traveling information of each of a plurality of vehicles.

The plurality of vehicles are vehicles that meet. The traveling information of the vehicle may include a planned route, a current traveling direction and traveling speed, and the like of the vehicle.

For example, the roadside device may receive the traveling information of each of a plurality of vehicles that meet. As shown in FIG. 1, for the roadside device, the vehicle 1 to the vehicle 5 may be the plurality of vehicles that meet, and the roadside device may receive traveling information of each of the vehicle 1 to the vehicle 5.

In step 420, the roadside device determines a vehicle meeting solution based on road condition information and the traveling information of each of the plurality of vehicles.

The roadside device may determine the vehicle meeting solution based on the road condition information, the traveling information of each of the plurality of vehicles that meet, and the like. The roadside device may further determine the vehicle meeting solution based on the road condition information, the traveling information of each of the plurality of vehicles that meet, and the like, and with reference to a high-definition map. The high-definition map may come from a cloud, for example, a smart transportation cloud. This is not limited in embodiments of this application.

By way of example, and not limitation, the roadside device may determine the vehicle meeting solution based on the road condition information, the traveling information of each of the plurality of vehicles that meet, and a multi-vehicle collaborative control algorithm. The multi-vehicle collaborative control algorithm is obtained based on a distributed model predictive control (distributed model predictive control, DMPC) algorithm and a kinematics model. The multi-vehicle collaborative control algorithm is used to minimize passing time of each vehicle that performs vehicle meeting while ensuring traveling safety of the vehicle.

For example, steps of the multi-vehicle collaborative control algorithm are roughly as follows.

Step A: Determine, based on the traveling information of each of the plurality of vehicles that meet, for example, a planned route, a current location, a current traveling speed, a current acceleration, and a current traveling direction of the vehicle, a passing sequence of the plurality of vehicles that meet and a traveling direction recommended to each of the plurality of vehicles that meet. The high-definition map may be further used in a process of determining the passing sequence of the plurality of vehicles and the traveling direction recommended to each vehicle. This is not limited in embodiments of this application.

Step B: Determine, based on the traveling information of each of the plurality of vehicles that meet, for example, the current location, and the current traveling speed and acceleration of the vehicle, a traveling speed, an acceleration, and the like that are recommended to each of the plurality of vehicles that meet.

The DMPC algorithm and the kinematics model need to be used in this process. The kinematics model may be as follows:

$$p(k+1) = p(k) + t \times v(k) + \frac{a(k) \times t^2}{2} \quad \text{and} \quad v(k+1) = v(k) + a(k) \times t ,$$

where p may represent a location of a vehicle along a respective planned route, v may represent a speed recommended to the vehicle, a may represent an acceleration recommended to the vehicle, k may represent a discrete time point, for example, a $k^{th}$ step, and t may represent a discrete time interval.

The DMPC algorithm is used to restrict physical quantities such as p, v, and a in the kinematic model of each of the plurality of vehicles, and ensure executability of the physical quantities such as p, v, and a of each vehicle by restricting the physical quantities such as p, v, and a of each vehicle. In addition, the DMPC algorithm ensures that a spacing between any two vehicles at any moment is greater than a specific threshold, to avoid a vehicle collision and ensure safe traveling of the vehicle. In addition, a speed of the last k steps of the vehicle in time domain in which the vehicle is remotely controlled may be further used, so that the vehicle reaches a next target location as soon as possible when traveling safety of the vehicle is ensured. In addition, to ensure passenger's comfort, a size of a of each vehicle in each time interval may also be restricted.

Based on the foregoing step A and step B, the roadside device may determine the vehicle meeting solution.

In step 430, the roadside device sends the vehicle meeting solution to the plurality of vehicles.

After determining the vehicle meeting solution, the roadside device may send the vehicle meeting solution to the plurality of vehicles.

Optionally, the vehicle meeting solution is a vehicle meeting solution sent to the first vehicle, and the vehicle meeting solution indicates the passing sequence of the plurality of vehicles during vehicle meeting, and one or more of the following: a traveling direction, a traveling speed, and an acceleration that are recommended to the first vehicle.

To be specific, content indicated by vehicle meeting solutions sent by the roadside device to different vehicles may be different in addition to the passing sequence of the plurality of vehicles. For example, a vehicle meeting solution sent to the vehicle 1 may indicate a passing sequence of the vehicle 1, a vehicle 3, and a vehicle 4, and a traveling direction, a traveling speed, an acceleration, and the like that are recommended to the vehicle 1. A vehicle meeting solution sent to the vehicle 3 may indicate the passing sequence of the vehicle 1, the vehicle 3, and the vehicle 4, and a traveling direction, a traveling speed, an acceleration, and the like that are recommended to the vehicle 3. A vehicle meeting solution sent to the vehicle 4 may indicate the passing sequence of the vehicle 1, the vehicle 3, and the vehicle 4, and a traveling direction, a traveling speed, an acceleration, and the like that are recommended to the vehicle 4. For detailed descriptions, refer to related descriptions in the method 300. For brevity, details are not described herein again.

Optionally, the vehicle meeting solution further indicates one or more of the following: a traveling direction, a traveling speed, and an acceleration that are recommended to each of the plurality of vehicles other than the first vehicle.

To be specific, content indicated by the vehicle meeting solutions sent by the roadside device to different vehicles may be the same in addition to the passing sequence of the plurality of vehicles. For example, vehicle meeting solutions sent to the vehicle 1, the vehicle 3, and the vehicle 4 may indicate the passing sequence of the vehicle 1, the vehicle 3, and the vehicle 4, and a traveling direction, a traveling speed, an acceleration, and the like that are recommended to the vehicle 1, the vehicle 3, and the vehicle 4 respectively. For detailed descriptions, refer to related descriptions in the method 300. For brevity, details are not described herein again.

In a possible implementation, before step 420, the method 400 may further include the following steps.

Step 7: The roadside device enters a command mode when determining, based on the road condition information, that complexity of a current road condition is greater than a second preset threshold.

Step 8: The roadside device determines a plurality of vehicles that may meet.

Step 9: The roadside device sends takeover messages to the plurality of vehicles.

The command mode may be understood as a mode in which the vehicle can be remotely controlled.

As described above, a first mode is a mode in which a vehicle is controlled through autonomous decision-making of the vehicle, a second mode is a mode in which the vehicle is remotely controlled through decision-making of the roadside device, and the takeover message may indicate the vehicle to switch from the first mode to the second mode.

To be specific, when determining, based on the road condition information, that the complexity of the current road condition is greater than the second preset threshold, the roadside device may determine that a current road condition scenario is a complex road condition scenario. In this case, the roadside device may actively enter the command mode, determine the plurality of vehicles that may meet, and send the takeover messages to the plurality of vehicles, so that the roadside device makes a decision to remotely control the plurality of vehicles that meet. For example, when determining, based on the road condition information, that the complexity of the current road condition is greater than the second preset threshold, the roadside device actively enters the command mode, and determines that the plurality of vehicles that may meet are the vehicle 1 to the vehicle 5. Then the roadside device sends takeover messages to the vehicle 1 to the vehicle 5, so that the roadside device makes a decision to remotely control the vehicle 1 to the vehicle 5.

It should be noted that, in this implementation, all the foregoing step 7 to step 9 may be performed before step 410.

In another possible implementation, before step 420, the method 400 may further include: The roadside device enters the command mode when receiving a request message from the first vehicle in the plurality of vehicles.

As described above, the request message may request to obtain the vehicle meeting solution.

To be specific, when receiving the request message from the first vehicle in the plurality of vehicles, the roadside device may passively enter the command mode.

Optionally, the request message carries at least one of the following: traveling information of the first vehicle; and indication information, where the indication information indicates vehicles that may meet.

For example, as shown in FIG. 1, if the vehicle 1 is the first vehicle, the roadside device may receive a request message from the vehicle 1. The request message may carry traveling information of the vehicle 1, and/or information that indicates the vehicles that may meet. For the vehicle 1, the vehicles that may meet include the vehicle 1, the vehicle 3, and the vehicle 4. After receiving the request message of the vehicle 1, the roadside device may passively enter the command mode, so that the roadside device makes a decision to remotely control the vehicle 1, the vehicle 3, and the vehicle 4.

Based on the solution, in the complex road condition scenario, the plurality of vehicles that meet are remotely controlled through decision-making of the roadside device, to provide a vehicle meeting solution for the plurality of vehicles that meet, so that the plurality of vehicles that meet only need to perform vehicle meeting based on the received vehicle meeting solution. This can save time for game calculation between vehicles, to improve vehicle meeting efficiency.

The following briefly describes the method 300 and the method 400 again with reference to FIG. 1, FIG. 5A and FIG. 5B, and FIG. 6A and FIG. 6B.

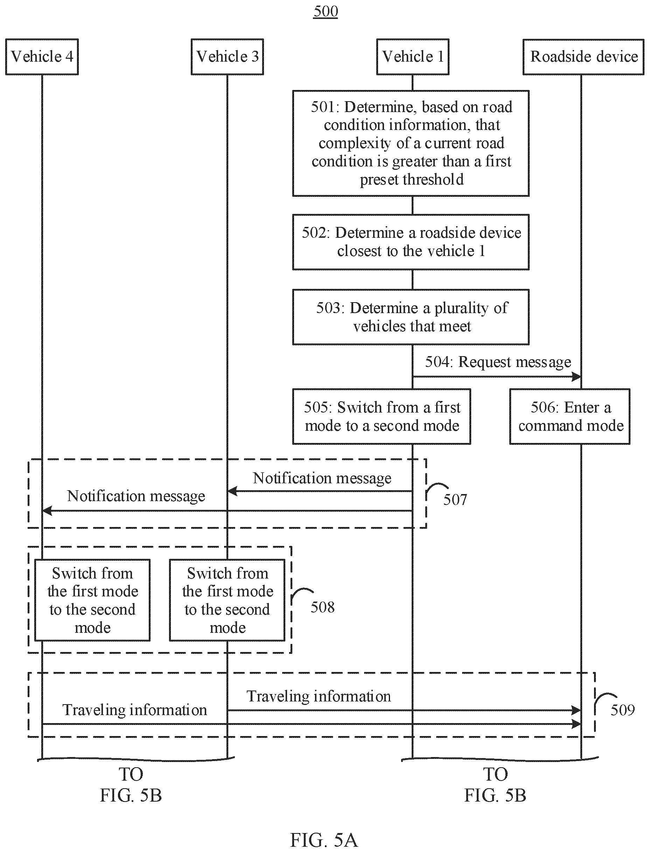

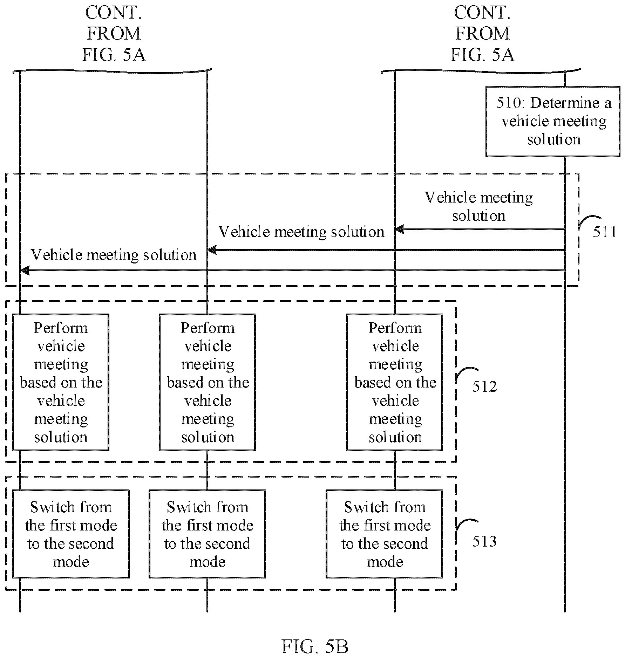

FIG. 5A and FIG. 5B are a diagram of a vehicle meeting method shown from a perspective of interaction between a vehicle and a roadside device according to an embodiment of this application. FIG. 5A and FIG. 5B show a process of interaction between the roadside device and, the vehicle 1, the vehicle 3, and the vehicle 4. FIG. 5A and FIG. 5B show a case in which the vehicle 1 actively switches from the first mode to the second mode, and namely, a case in which the roadside device passively enters the command mode. A method 500 shown in FIG. 5A and FIG. 5B includes step 501 to step 513. The following briefly describes each step.

In step 501, the vehicle 1 determines, based on the road condition information, that current complexity is greater than the first preset threshold.

The vehicle 1 may actively determine the complexity of the current road condition based on the road condition information, to determine whether the vehicle 1 is in a complex road condition scenario.

In step 502, the vehicle 1 determines a roadside device closest to the vehicle 1.

In step 503, the vehicle 1 determines a plurality of vehicles that meet.

With reference to the scenario shown in FIG. 1, the vehicle 1 may determine that the vehicle 3 and the vehicle 4 are second vehicles. In other words, the vehicle 1 may determine that the vehicle 1, the vehicle 3, and the vehicle 4 are the plurality of vehicles that meet.

It should be noted that a sequence of step 502 and step 503 is not limited in embodiments of this application. For example, in an actual application scenario, the vehicle 1 may first perform step 502 and then perform step 503; or the vehicle 1 may first perform step 503 and then perform step 502; or the vehicle 1 may simultaneously perform step 502 and step 503.

In step 504, the vehicle 1 may send a request message to the roadside device, and correspondingly, the roadside device receives the request message from the vehicle 1.

The request message may carry traveling information of the vehicle 1, and may further carry indication information that indicates the plurality of vehicles that meet. Alternatively, the request message may not carry traveling information and indication information of the vehicle 1, and the vehicle 1 may separately send the traveling information and/or the indication information of the vehicle 1 to the roadside device. This is not limited in this application.

In step 505, the vehicle 1 switches from the first mode to the second mode.

The vehicle 1 may actively switch from the first mode to the second mode.

It should be noted that a sequence of step 504 and step 505 is not limited in embodiments of this application. In an actual application scenario, the vehicle 1 may first perform step 504 and then perform step 505; or the vehicle 1 may first perform step 505 and then perform step 504; or the vehicle 1 may simultaneously perform step 504 and step 505.

In step 506, the roadside device enters the command mode.

The roadside device may passively enter the command mode after receiving the request message of the vehicle 1.

In step 507, the vehicle 1 sends notification messages to the vehicle 3 and the vehicle 4, and correspondingly, the vehicle 3 and the vehicle 4 receive the notification messages from the vehicle 1.

In step 508, the vehicle 3 and the vehicle 4 switch from the first mode to the second mode.

After receiving the notification message of the vehicle 1, the vehicle 3 and the vehicle 4 passively switch from the first mode to the second mode.

In step 509, the vehicle 3 and the vehicle 4 send respective traveling information, and correspondingly, the roadside device receives the traveling information from the vehicle 3, and receives the traveling information from the vehicle 4.

It should be noted that a sequence of step 508 and step 509 is not limited in embodiments of this application. For example, in an actual application scenario, step 508 may be performed first, and then step 509 is performed; or step 509 may be performed first, and then step 508 is performed; or step 508 and step 509 may be performed simultaneously.

In step 510, the roadside device determines a vehicle meeting solution.

In step 511, the roadside device sends the vehicle meeting solution to the vehicle 1, the vehicle 3, and the vehicle 4, and correspondingly, the vehicle 1, the vehicle 3, and the vehicle 4 receive the vehicle meeting solution from the roadside device.

In step 512, the vehicle 1, the vehicle 3, and the vehicle 4 respectively perform vehicle meeting based on the vehicle meeting solution.

In step 513, the vehicle 1, the vehicle 3, and the vehicle 4 separately switch from the second mode to the first mode.

It should be noted that in an actual application scenario, the vehicle 1, the vehicle 3, and the vehicle 4 may perform step 513, or may not perform step 513. This is not limited in this application.

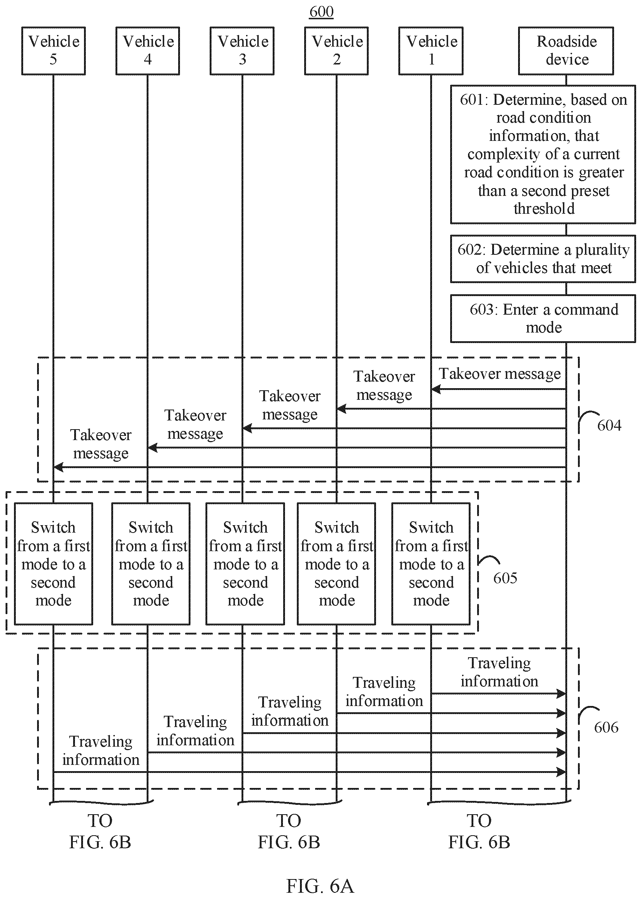

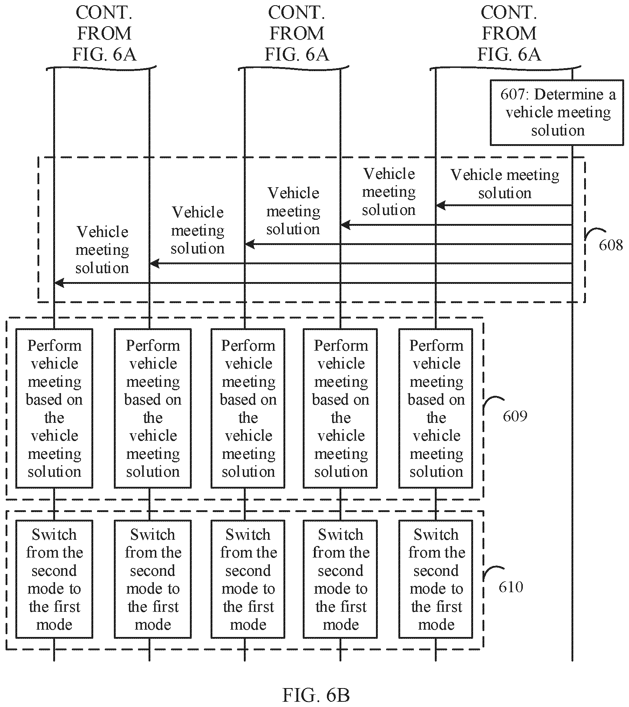

FIG. 6A and FIG. 6B are another diagram of a vehicle meeting method shown from a perspective of interaction between a vehicle and a roadside device according to an embodiment of this application. FIG. 6A and FIG. 6B show a process of interaction between the vehicle 1 to the vehicle 5 and the roadside device. FIG. 6A and FIG. 6B show a case in which the vehicle 1 to the vehicle 5 passively switch from the first mode to the second mode, namely, a case in which the roadside device actively enters the command mode. A method 600 shown in FIG. 6A and FIG. 6B includes step 601 to step 610. The following briefly describes each step.

In step 601, the roadside device determines, based on the road condition information, that the complexity of the current road condition is greater than the second preset threshold.

The roadside device may actively determine the complexity of the current road condition based on the road condition information, to determine whether the current road condition is a complex road condition scenario.

In step 602, the roadside device determines a plurality of vehicles that meet.

With reference to the scenario shown in FIG. 1, the roadside device may determine, through analysis, that the vehicle 1 to the vehicle 5 are the plurality of vehicles that meet.

In step 603, the roadside device enters the command mode.

In step 604, the roadside device sends takeover messages to the vehicle 1 to the vehicle 5, and correspondingly, the vehicle 1 to the vehicle 5 separately receive the takeover message from the roadside device.

It should be noted that step 604 is performed after step 602. However, a specific execution sequence of step 602, step 603, and step 604 is not limited in embodiments of this application. For example, in an actual application scenario, the roadside device may sequentially perform step 602, step 603, and step 604, or may sequentially perform step 602, step 604, and step 603, or may sequentially perform step 603, step 602, and step 604. Alternatively, the roadside device may first perform step 602, and then simultaneously perform step 603 and step 604. Alternatively, the roadside device may first simultaneously perform step 602 and step 603, and then perform step 604. This is not limited in embodiments of this application.

In step 605, the vehicle 1 to the vehicle 5 separately switch from the first mode to the second mode.

In step 606, the vehicle 1 to the vehicle 5 separately send respective traveling information to the roadside device, and correspondingly, the roadside device separately receives the respective traveling information from the vehicle 1 to the vehicle 5.

It should be noted that a sequence of step 605 and step 606 is not limited in embodiments of this application. For example, in an actual application scenario, step 605 may be performed first, and then step 606 is performed; or step 606 may be performed first, and then step 605 is performed; or step 605 and step 606 may be performed simultaneously.

In step 607, the roadside device determines a vehicle meeting solution.

In step 608, the roadside device sends the vehicle meeting solution to the vehicle 1 to the vehicle 5, and correspondingly, the vehicle 1 to the vehicle 5 receive the vehicle meeting solution from the roadside device.

In step 609, the vehicle 1 to the vehicle 5 separately perform vehicle meeting based on the vehicle meeting solution.

In step 610, the vehicle 1 to the vehicle 5 separately switch from the second mode to the first mode.

It should be noted that in an actual application scenario, the vehicle 1 to the vehicle 5 may perform step 610, or may not perform step 610. This is not limited in this application.

It should be understood that FIG. 5A and FIG. 5B and FIG. 6A and FIG. 6B are merely examples, and should not impose any limitation on embodiments of this application.

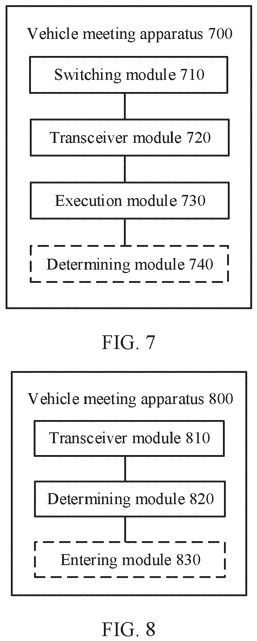

The vehicle meeting method provided in embodiments of this application is described above in detail with reference to FIG. 3 to FIG. 6B. The following describes in detail related apparatuses provided in embodiments of this application with reference to FIG. 7 to FIG. 9.

FIG. 7 is a block diagram of a vehicle meeting apparatus according to an embodiment of this application.

As shown in FIG. 7, the vehicle meeting apparatus 700 may include a switching module 710, a transceiver module 720, and an execution module 730. The vehicle meeting apparatus 700 may be configured to perform the steps of the vehicle in any one of the method embodiments shown in FIG. 3, FIG. 5A and FIG. 5B, and FIG. 6A and FIG. 6B.

For example, when the vehicle meeting apparatus 700 is configured to perform the steps of the first vehicle in the method 300 shown in FIG. 3, the switching module 710 may be configured to switch from a first mode to a second mode, where the first mode is a mode in which a vehicle is controlled through autonomous decision-making of the vehicle, and the second mode is a mode in which the vehicle is remotely controlled by a roadside device through decision-making. The transceiver module 720 may be configured to receive a vehicle meeting solution from the roadside device, where the vehicle meeting solution is used to schedule a plurality of vehicles that meet during vehicle meeting. The execution module 730 may be configured to perform vehicle meeting based on the vehicle meeting solution.

Optionally, the vehicle meeting solution indicates a passing sequence of the plurality of vehicles during vehicle meeting.

Optionally, the vehicle meeting solution further indicates one or more of the following: a traveling direction, a traveling speed, and an acceleration that are recommended to the first vehicle.

Optionally, the vehicle meeting solution further indicates one or more of the following: a traveling direction, a traveling speed, and an acceleration that are recommended to each of the plurality of vehicles other than the first vehicle.

Optionally, the vehicle meeting apparatus 700 may further include a determining module 740. The determining module 740 may be configured to determine, based on road condition information, that complexity of a current road condition is greater than a first preset threshold, where the road condition information is obtained based on data collected by a sensing device, the sensing device includes a sensing device deployed on a roadside and/or a sensing device deployed on the first vehicle. The transceiver module 720 may be further configured to send a request message to the roadside device, where the request message is used to request to obtain the vehicle meeting solution.

Optionally, the request message carries traveling information of the first vehicle, and the traveling information includes a planned route, and a current traveling direction and traveling speed.

Optionally, the determining module 740 may be further configured to determine a second vehicle, where the second vehicle is one or more of the plurality of vehicles other than the first vehicle. The transceiver module 720 may be further configured to send a notification message to the second vehicle, where the notification message indicates the second vehicle to switch from the first mode to the second mode.

Optionally, the request message carries indication information, and the indication information indicates the plurality of vehicles that may meet.

Optionally, the determining module 740 may be further specifically configured to determine a first roadside device closest to the first vehicle. The transceiver module 720 may be further configured to send a request message to the first roadside device.

Optionally, the transceiver module 720 may be further configured to receive a takeover message from the roadside device, where the takeover message indicates the first vehicle to switch from the first mode to the second mode.

Optionally, the transceiver module 720 may be further configured to receive a notification message from a third vehicle, where the notification message indicates the first vehicle to switch from the first mode to the second mode, and the third vehicle is any vehicle in the plurality of vehicles other than the first vehicle. The transceiver module 720 may be further configured to send the traveling information of the first vehicle to the roadside device, where the traveling information includes a planned route, and a current traveling direction and traveling speed.

Optionally, the switching module 710 may be further configured to switch from the second mode to the first mode.

FIG. 8 is another block diagram of a vehicle meeting apparatus according to an embodiment of this application. As shown in FIG. 8, the vehicle meeting apparatus 800 may include a transceiver module 810 and a determining module 820. The vehicle meeting apparatus 800 may be configured to perform the steps of the roadside vehicle in any one of the method embodiments shown in FIG. 4, FIG. 5A and FIG. 5B, and FIG. 6A and FIG. 6B.

For example, when the vehicle meeting apparatus 800 is configured to perform the steps of the roadside device in the method 400 shown in FIG. 4, the transceiver module 810 may be configured to receive traveling information of each of a plurality of vehicles, where the traveling information includes: a planned route, and a current traveling direction and traveling speed, where the plurality of vehicles are vehicles that meet. The determining module 820 may be configured to determine a vehicle meeting solution based on road condition information and the traveling information of each of the plurality of vehicles, where the road condition information indicates a current traffic condition on a road surface, and the vehicle meeting solution is used to schedule the plurality of vehicles during vehicle meeting. The transceiver module 810 may be further configured to send a vehicle meeting solution to the plurality of vehicles.

Optionally, the determining module 820 may be further configured to enter a command mode when it is determined, based on the road condition information, that complexity of a current road condition is greater than a second preset threshold, where the command mode is a mode in which the vehicle is remotely controlled. The determining module 820 may be further configured to determine the plurality of vehicles that may meet. The transceiver module 810 may be further configured to send a takeover message to the plurality of vehicles. The takeover message indicates the vehicle to switch from a first mode to a second mode. The first mode is a mode in which a vehicle is controlled through autonomous decision-making of the vehicle, and the second mode is a mode in which the vehicle is remotely controlled through decision-making of the roadside device.

Optionally, the vehicle meeting apparatus 800 may further include an entering module 830. The entering module 830 may be configured to enter the command mode when a request message from a first vehicle in the plurality of vehicles is received, where the command mode is a mode in which the vehicle is remotely controlled, and the request message is used to request to obtain the vehicle meeting solution.

Optionally, the request message carries at least one of the following: traveling information of the first vehicle; and indication information, where the indication information indicates vehicles that may meet.

Optionally, the vehicle meeting solution is a vehicle meeting solution sent to the first vehicle, and the vehicle meeting solution indicates a passing sequence of the plurality of vehicles during vehicle meeting, and one or more of the following: a traveling direction, a traveling speed, and an acceleration that are recommended to the first vehicle.

Optionally, the vehicle meeting solution further indicates one or more of the following: a traveling direction, a traveling speed, and an acceleration that are recommended to each of the plurality of vehicles other than the first vehicle.

It should be understood that module division of the vehicle meeting apparatus in FIG. 7 and FIG. 8 is merely an example. In an actual application, different functional modules may be obtained through division based on different function requirements. A division form and a quantity of functional modules in an actual application are not limited in this application. In addition, FIG. 7 and FIG. 8 cannot impose any limitation on this application.

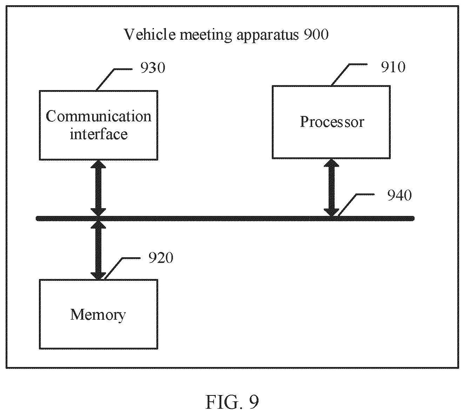

FIG. 9 is still another block diagram of a vehicle meeting apparatus according to an embodiment of this application. The vehicle meeting apparatus may be configured to implement the method performed by any vehicle in the embodiment corresponding to any one of FIG. 3, FIG. 5A and FIG. 5B, and FIG. 6A and FIG. 6B, or may be configured to implement the method performed by the roadside device in the embodiment corresponding to any one of FIG. 4 to FIG. 6B. The vehicle meeting apparatus may be a chip system. In this embodiment of this application, the chip system may include a chip, or may include a chip and another discrete component.

For example, when the vehicle meeting apparatus 900 is configured to implement the method 300 provided in this embodiment of this application, a processor 910 may be configured to: switch from a first mode to a second mode, where the first mode is a mode in which a vehicle is controlled through autonomous decision-making of the vehicle, and the second mode is a mode in which the vehicle is remotely controlled through decision-making of the roadside device; receive a vehicle meeting solution from the roadside device, where the vehicle meeting solution is used to schedule a plurality of vehicles that meet during vehicle meeting; and perform vehicle meeting based on the vehicle meeting solution. For details, refer to detailed descriptions in the method example. Details are not described herein again.

For example, when the vehicle meeting apparatus 900 is configured to implement the method 400 provided in this embodiment of this application, the processor 910 may be configured to: receive traveling information of each of the plurality of vehicles, where the traveling information includes: a planned route, and a current traveling direction and traveling speed, and the plurality of vehicles are vehicles that meet; determine a vehicle meeting solution based on road condition information and the traveling information of each of the plurality of vehicles, where the road condition information indicates a current traffic condition on a road surface, and the vehicle meeting solution is used to schedule the plurality of vehicles during vehicle meeting; and send a vehicle meeting solution to the plurality of vehicles. For details, refer to detailed descriptions in the method example. Details are not described herein again.

For example, when the vehicle meeting apparatus 900 is configured to implement the method performed by a vehicle 1 in the method 500 provided in this embodiment of this application, the processor 910 may be configured to perform step 501 to step 505, step 507, and step 511 to step 513. When the vehicle meeting apparatus 900 is configured to implement the method performed by a vehicle 3 or a vehicle 4 in the method 500 provided in this embodiment of this application, the processor 910 may be configured to perform step 507 to step 509 and step 511 to step 513. When the vehicle meeting apparatus 900 is configured to implement the method performed by the roadside device in the method 500 provided in this embodiment of this application, the processor 910 may be configured to perform step 504, step 506, and step 509 to step 511.

For example, when the vehicle meeting apparatus 900 is configured to implement the method performed by any one of a vehicle 1 to a vehicle 5 in the method 600 provided in this embodiment of this application, the processor 910 may be configured to perform step 604 to step 606 and step 608 to step 610. When the vehicle meeting apparatus 900 is configured to implement the method performed by the roadside device in the method 600 provided in this embodiment of this application, the processor 910 may be configured to perform step 601 to step 604 and step 606 to step 608.

The vehicle meeting apparatus 900 may further include at least one memory 920 that may be configured to store program instructions, data, and the like. The memory 920 is coupled to the processor 910. Coupling in this embodiment of this application may be indirect coupling or a communication connection between apparatuses, units, or modules in an electrical form, a mechanical form, or another form, and is used for information exchange between the apparatuses, the units, or the modules. The processor 910 may operate cooperatively with the memory 920. The processor 910 may execute the program instructions stored in the memory 920. At least one of the at least one memory may be included in the processor.

The vehicle meeting apparatus 900 may further include a communication interface 930, configured to communicate with another device by using a transmission medium, so that the vehicle meeting apparatus 900 may communicate with the another device. For example, when the vehicle meeting apparatus 900 is a first vehicle, the another device may be a second vehicle, a third vehicle, or a roadside device. When the vehicle meeting apparatus 900 is a roadside device, the another device may be a vehicle. The communication interface 930 may be, for example, a transceiver, an interface, a bus, a circuit, or an apparatus that can implement receiving and sending functions. The processor 910 may send and receive data and/or information through the communication interface 930, and is configured to implement the method 300 performed by the vehicle in the embodiment corresponding to any one of FIG. 3, FIG. 5A and FIG. 5B, and FIG. 6A and FIG. 6B, or configured to implement the method performed by the roadside device in the embodiment corresponding to any one of FIG. 4 to FIG. 6B.

A specific connection medium between the processor 910, the memory 920, and the communication interface 930 is not limited in embodiments of this application. In this embodiment of this application, in FIG. 9, the processor 910, the memory 920, and the communication interface 930 are connected through a bus 940. The bus 940 is represented by a bold line in FIG. 9. A manner of connection between other components is merely an example for description, and is not limited thereto. The bus may be classified into an address bus, a data bus, a control bus, and the like. For ease of representation, only one bold line is used to represent the bus in FIG. 9, but this does not mean that there is only one bus or only one type of bus.

This application provides a vehicle. The vehicle includes a processor. The processor is coupled to a memory, and may be configured to execute a computer program in the memory, to implement the method performed by the vehicle in the embodiment shown in any one of FIG. 3, FIG. 5A and FIG. 5B, and FIG. 6A and FIG. 6B.

Optionally, the vehicle further includes the memory.

Optionally, the vehicle further includes a communication interface, and the processor is coupled to the communication interface.

This application further provides a roadside device. The roadside device includes a processor. The processor is coupled to a memory, and may be configured to execute a computer program in the memory, to implement the method performed by the roadside device in the embodiment shown in any one of FIG. 4 to FIG. 6B.

Optionally, the roadside device further includes the memory.

Optionally, the roadside device further includes a communication interface, and the processor is coupled to the communication interface.

This application further provides a chip system. The chip system includes at least one processor, configured to implement functions in the method performed by the vehicle in the embodiment shown in any one of FIG. 3, FIG. 5A and FIG. 5B, and FIG. 6A and FIG. 6B, or configured to implement functions in the method performed by the roadside device in the embodiment shown in any one of FIG. 4 to FIG. 6B.

In a possible design, the chip system further includes a memory, the memory is configured to store program instructions and data, and the memory is located in the processor or outside the processor.

The chip system may include a chip, or may include a chip and another discrete device.

This application further provides a computer program product. The computer program product includes a computer program (which may also be referred to as code or instructions). When the computer program is run, a computer is enabled to perform the method in the embodiment shown in any one of FIG. 3 to FIG. 6B.

This application further provides a computer-readable storage medium. The computer-readable storage medium stores a computer program (which may also be referred to as code or instructions). When the computer program is run, the computer is enabled to perform the method in the embodiment shown in any one of FIG. 3 to FIG. 6B.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software.

The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Terms such as "unit" and "module" used in this specification may indicate computerrelated entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the apparatus embodiments described above are merely examples. For example, the module division is merely logical function division and may be other division during an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of embodiments.

In addition, functional modules in embodiments of this application may be integrated into one processing module, or each of the modules may exist alone physically, or two or more units are integrated into one module.

In the foregoing embodiments, all or some of the functions of the functional modules may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), or an optical medium (for example, a digital versatile disc (digital video disc, DVD)), a semiconductor medium (for example, a solid state disk (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A vehicle meeting method, applied to a first vehicle, wherein the method comprises:

   switching from a first mode to a second mode, wherein the first mode is a mode in which a vehicle is controlled through autonomous decision-making of the vehicle, and the second mode is a mode in which the vehicle is remotely controlled through decision-making of a roadside device;
   receiving a vehicle meeting solution from the roadside device, wherein the vehicle meeting solution is used to schedule a plurality of vehicles that meet during vehicle meeting; and
   performing vehicle meeting based on the vehicle meeting solution.

2. The method according to claim 1, wherein the vehicle meeting solution indicates a passing sequence of the plurality of vehicles during vehicle meeting.

3. The method according to claim 2, wherein the vehicle meeting solution further indicates one or more of the following: a traveling direction, a traveling speed, and an acceleration that are recommended to the first vehicle.

4. The method according to claim 3, wherein the vehicle meeting solution further indicates one or more of the following: a traveling direction, a traveling speed, and an acceleration that are recommended to each of the plurality of vehicles other than the first vehicle.

5. The method according to any one of claims 1 to 4, wherein the method further comprises:

   determining, based on road condition information, that complexity of a current road condition is greater than a first preset threshold, wherein the road condition information is obtained based on data collected by a sensing device, and the sensing device comprises a sensing device deployed on a roadside and/or a sensing device deployed on the first vehicle; and
   sending a request message to the roadside device, wherein the request message is used to request to obtain the vehicle meeting solution.

6. The method according to claim 5, wherein the request message carries traveling information of the first vehicle, and the traveling information comprises a planned route, and a current traveling direction and traveling speed.

7. The method according to claim 5 or 6, wherein the method further comprises:

   determining a second vehicle, wherein the second vehicle is one or more of the plurality of vehicles other than the first vehicle; and
   sending a notification message to the second vehicle, wherein the notification message indicates the second vehicle to switch from the first mode to the second mode.

8. The method according to claim 7, wherein the request message carries indication information, and the indication information indicates the plurality of vehicles that may meet.

9. The method according to any one of claims 5 to 8, wherein the sending a request message to the roadside device comprises:

   determining a first roadside device closest to the first vehicle; and
   sending the request message to the first roadside device.

10. The method according to any one of claims 1 to 4, wherein the method further comprises:
    receiving a takeover message from the roadside device, wherein the takeover message indicates the first vehicle to switch from the first mode to the second mode.

11. The method according to any one of claims 1 to 4, wherein the method further comprises:

    receiving a notification message from a third vehicle, wherein the notification message indicates the first vehicle to switch from the first mode to the second mode, and the third vehicle is any vehicle in the plurality of vehicles other than the first vehicle; and
    sending traveling information of the first vehicle to the roadside device, wherein the traveling information comprises a planned route, and a current traveling direction and traveling speed.

12. The method according to any one of claims 1 to 11, wherein after the performing vehicle meeting based on the vehicle meeting solution, the method further comprises:
    switching from the second mode to the first mode.

13. A vehicle meeting method, applied to a roadside vehicle, wherein the method comprises:

    receiving traveling information of each of a plurality of vehicles, wherein the traveling information comprises a planned route, and a current traveling direction and traveling speed, and the plurality of vehicles are vehicles that meet;
    determining a vehicle meeting solution based on road condition information and the traveling information of each of the plurality of vehicles, wherein the road condition information indicates a current traffic condition on a road surface, and the vehicle meeting solution is used to schedule the plurality of vehicles during vehicle meeting; and
    sending the vehicle meeting solution to the plurality of vehicles.

14. The method according to claim 13, wherein before the determining a vehicle meeting solution, the method further comprises:

    entering a command mode when it is determined, based on the road condition information, that complexity of a current road condition is greater than a second preset threshold, wherein the command mode is a mode in which a vehicle is remotely controlled;
    determining the plurality of vehicles that may meet; and
    sending a takeover message to the plurality of vehicles, wherein the takeover message indicates the vehicle to switch from a first mode to a second mode, wherein the first mode is a mode in which a vehicle is controlled by the vehicle through autonomous decision-making, and the second mode is a mode in which the vehicle is remotely controlled by a roadside device through decision-making.

15. The method according to claim 13, wherein before the determining a vehicle meeting solution, the method further comprises:
    entering a command mode when a request message is received from a first vehicle in the plurality of vehicles, wherein the command mode is a mode in which a vehicle is remotely controlled, and the request message is used to request to obtain the vehicle meeting solution.

16. The method according to claim 15, wherein the request message carries at least one of the following:

    traveling information of the first vehicle; and
    indication information, wherein the indication information indicates vehicles that may meet.

17. The method according to claim 15 or 16, wherein the vehicle meeting solution is a vehicle meeting solution sent to the first vehicle, and the vehicle meeting solution indicates a passing sequence of the plurality of vehicles during vehicle meeting, and one or more of the following: a traveling direction, a traveling speed, and an acceleration that are recommended to the first vehicle.

18. The method according to claim 17, wherein the vehicle meeting solution further indicates one or more of the following: a traveling direction, a traveling speed, and an acceleration that are recommended to each of the plurality of vehicles other than the first vehicle.

19. A vehicle meeting apparatus, comprising a module configured to implement the method according to any one of claims 1 to 12, or comprising a module configured to implement the method according to any one of claims 13 to 18.

20. A vehicle meeting apparatus, comprising a memory and a processor, wherein

the memory is configured to store a computer program; and
the processor is configured to invoke and execute the computer program, to enable the apparatus to perform the method according to any one of claims 1 to 12, or to enable the apparatus to perform the method according to any one of claims 13 to 18.

21. A vehicle, wherein the vehicle is configured to implement the method according to any one of claims 1 to 12.

22. A roadside device, wherein the roadside device is configured to implement the method according to any one of claims 13 to 18.

23. A computer-readable storage medium storing a computer program, wherein when the computer program is executed by a processor, a computer is enabled to perform the method according to any one of claims 1 to 18.

24. A computer program product, comprising a computer program, wherein when the computer program is run, a computer is enabled to perform the method according to any one of claims 1 to 18.

FIG. 1

FIG. 2

300

| A first vehicle switches from a first mode to a second mode | 310 |

| The first vehicle receives a vehicle meeting solution from a roadside device | 320 |

| The first vehicle performs vehicle meeting based on the vehicle meeting solution | 330 |

FIG. 3

400

| A roadside device receives traveling information of each of a plurality of vehicles | 410 |

| The roadside device determines a vehicle meeting solution based on road condition information and the traveling information of each of the plurality of vehicles | 420 |

| The roadside device sends the vehicle meeting solution to the plurality of vehicles | 430 |

FIG. 4

500

| Vehicle 4 | Vehicle 3 | Vehicle 1 | Roadside device |
|-----------|-----------|-----------|-----------------|

501: Determine, based on road condition information, that complexity of a current road condition is greater than a first preset threshold

502: Determine a roadside device closest to the vehicle 1

503: Determine a plurality of vehicles that meet

504: Request message

505: Switch from a first mode to a second mode

506: Enter a command mode

Notification message

Notification message

507

Switch from the first mode to the second mode

Switch from the first mode to the second mode

508

Traveling information

Traveling information

509

TO
FIG. 5B

TO
FIG. 5B

FIG. 5A

FIG. 5B

FIG. 6A

CONT.
FROM
FIG. 6A

CONT.
FROM
FIG. 6A

CONT.
FROM
FIG. 6A

607: Determine a vehicle meeting solution

Vehicle meeting solution

Vehicle meeting solution

Vehicle meeting solution

Vehicle meeting solution

Vehicle meeting solution

608

| Perform vehicle meeting based on the vehicle meeting solution | Perform vehicle meeting based on the vehicle meeting solution | Perform vehicle meeting based on the vehicle meeting solution | Perform vehicle meeting based on the vehicle meeting solution | Perform vehicle meeting based on the vehicle meeting solution |

609

| Switch from the second mode to the first mode | Switch from the second mode to the first mode | Switch from the second mode to the first mode | Switch from the second mode to the first mode | Switch from the second mode to the first mode |

610

FIG. 6B

Vehicle meeting apparatus 700

Switching module 710

Transceiver module 720

Execution module 730

Determining module 740

FIG. 7

Vehicle meeting apparatus 800

Transceiver module 810

Determining module 820

Entering module 830

FIG. 8

Vehicle meeting apparatus 900

930

Communication
interface

910

Processor

940

920

Memory

FIG. 9

## INTERNATIONAL SEARCH REPORT

International application No.

**PCT/CN2023/089918**

**A.    CLASSIFICATION OF SUBJECT MATTER**

G08G1/0967(2006.01)i

According to International Patent Classification (IPC) or to both national classification and IPC

**B.    FIELDS SEARCHED**

Minimum documentation searched (classification system followed by classification symbols)

G08G,B60W,H04W,G01C

Documentation searched other than minimum documentation to the extent that such documents are included in the fields searched

Electronic data base consulted during the international search (name of data base and, where practicable, search terms used)

CNTXT; CNABS; WPABSC; ENTXTC; VEN; CNKI: 车辆, 交通, 自动驾驶, 无人驾驶, 会车, 路侧, RSU, 调度, 速度, 路径, 路线, 规划, 接管, vehicle, traffic, autonomous, unmanned, cross, meeting, road Side, RSU, dispatch, speed, route, path, planning, taking over

**C.    DOCUMENTS CONSIDERED TO BE RELEVANT**

| Category* | Citation of document, with indication, where appropriate, of the relevant passages | Relevant to claim No. |
|---|---|---|
| Y | CN 108109415 A (DONGFENG MOTOR CORP.) 01 June 2018 (2018-06-01) description, paragraphs 0004-0044 | 1-24 |
| Y | CN 113470350 A (CHINA RAILWAY MAJOR BRIDGE ENGINEERING GROUP CO., LTD. et al.) 01 October 2021 (2021-10-01) description, paragraphs 0005-0036 | 1-24 |
| Y | CN 110335488 A (SHENZHEN CHENGGU TECHNOLOGY CO., LTD.) 15 October 2019 (2019-10-15) description, paragraphs 0006-0085 | 1-24 |
| Y | CN 110164157 A (HUAREN YUNTONG (SHANGHAI) NEW ENERGY DRIVE TECHNOLOGY CO., LTD.) 23 August 2019 (2019-08-23) description, paragraphs 0044-0100 | 1-24 |
| Y | CN 106340197 A (BEIJING WANJI TECHNOLOGY CO., LTD.) 18 January 2017 (2017-01-18) description, paragraphs 0037-0077 | 1-24 |

☑ Further documents are listed in the continuation of Box C.          ☑ See patent family annex.

| | |
|---|---|
| *    Special categories of cited documents: | "T"   later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **24 July 2023** | **24 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 510 108 A1

## INTERNATIONAL SEARCH REPORT

International application No.

**PCT/CN2023/089918**

**C. DOCUMENTS CONSIDERED TO BE RELEVANT**

| Category* | Citation of document, with indication, where appropriate, of the relevant passages | Relevant to claim No. |
|---|---|---|
| A | CN 105788328 A (HUAWEI TECHNOLOGIES CO., LTD.) 20 July 2016 (2016-07-20)<br>entire document | 1-24 |
| A | CN 111583690 A (BEIJING TAGE IDRIVER TECHNOLOGY CO., LTD.) 25 August 2020 (2020-08-25)<br>entire document | 1-24 |
| A | CN 111899562 A (HUNAN UNIVERSITY SHENZHEN RESEARCH INSTITUTE) 06 November 2020 (2020-11-06)<br>entire document | 1-24 |
| A | CN 112289057 A (SHENZHEN GENVICT TECHNOLOGIES CO., LTD.) 29 January 2021 (2021-01-29)<br>entire document | 1-24 |
| A | CN 112614366 A (CHINA INTELLIGENT AND CONNECTED VEHICLES (BEIJING) RESEARCH INSTITUTE CO., LTD. et al.) 06 April 2021 (2021-04-06)<br>entire document | 1-24 |
| A | CN 112634632 A (BEIJING BAIDU NETCOM SCIENCE AND TECHNOLOGY CO., LTD.) 09 April 2021 (2021-04-09)<br>entire document | 1-24 |
| A | CN 113282090 A (SANY SPECIAL PURPOSE VEHICLE CO., LTD.) 20 August 2021 (2021-08-20)<br>entire document | 1-24 |
| A | CN 114330984 A (ZHONGZHIXING (SHANGHAI) TRAFFIC TECHNOLOGY CO., LTD.) 12 April 2022 (2022-04-12)<br>entire document | 1-24 |
| A | GB 2578916 A (JAGUAR LAND ROVER LTD.) 03 June 2020 (2020-06-03)<br>entire document | 1-24 |
| A | TW 201915970 A (ZHAO WENHUANG) 16 April 2019 (2019-04-16)<br>entire document | 1-24 |

Form PCT/ISA/210 (second sheet) (July 2022)

32

## INTERNATIONAL SEARCH REPORT
### Information on patent family members

International application No.

**PCT/CN2023/089918**

| Patent document cited in search report | | | Publication date (day/month/year) | Patent family member(s) | | | Publication date (day/month/year) |
|---|---|---|---|---|---|---|---|
| CN | 108109415 | A | 01 June 2018 | None | | | |
| CN | 113470350 | A | 01 October 2021 | None | | | |
| CN | 110335488 | A | 15 October 2019 | None | | | |
| CN | 110164157 | A | 23 August 2019 | None | | | |
| CN | 106340197 | A | 18 January 2017 | None | | | |
| CN | 105788328 | A | 20 July 2016 | None | | | |
| CN | 111583690 | A | 25 August 2020 | None | | | |
| CN | 111899562 | A | 06 November 2020 | None | | | |
| CN | 112289057 | A | 29 January 2021 | None | | | |
| CN | 112614366 | A | 06 April 2021 | None | | | |
| CN | 112634632 | A | 09 April 2021 | None | | | |
| CN | 113282090 | A | 20 August 2021 | None | | | |
| CN | 114330984 | A | 12 April 2022 | None | | | |
| GB | 2578916 | A | 03 June 2020 | GB | 201818537 | D0 | 26 December 2018 |
| | | | | GB | 2578916 | B | 12 May 2021 |
| TW | 201915970 | A | 16 April 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210482974